# EUROPÄISCHE PATENTSCHRIFT

(11) **EP 3 621 327 B1**
(45) Veröffentlichungstag und Bekanntmachung des Hinweises auf die Patenterteilung: **13.04.2022**
(21) Anmeldenummer: 18192367.3
(22) Anmeldetag: 04.09.2018
(51) Int. Cl.: H04W 4/46, H04L 29/08

(54) **VERFAHREN ZUR VORAUSSCHAUENDEN SCHÄTZUNG DER ÜBERTRAGUNGSBEDINGUNGEN FÜR EINE KOMMUNIKATION ZWISCHEN ZWEI KOMMUNIKATIONSPARTNERN, VORRICHTUNG ZUR DURCHFÜHRUNG VON VERFAHRENSSCHRITTEN DES VERFAHRENS, FAHRZEUG SOWIE COMPUTERPROGRAMM**
METHOD FOR PREDICTIVE ESTIMATION OF TRANSMISSION CONDITIONS FOR COMMUNICATION BETWEEN TWO COMMUNICATION PARTNERS, DEVICE FOR CARRYING OUT STEPS OF THE PROCESS, VEHICLE AND COMPUTER PROGRAM
PROCÉDÉ D'ESTIMATION ANTICIPÉE DES CONDITIONS DE TRANSMISSION D'UNE COMMUNICATION ENTRE DEUX PARTENAIRES DE COMMUNICATION, DISPOSITIF DE MISE EN OEUVRE DES ÉTAPES, VÉHICULE AINSI QUE PROGRAMME INFORMATIQUE

(43) Veröffentlichungstag der Anmeldung: 11.03.2020
(73) Patentinhaber: VOLKSWAGEN AKTIENGESELLSCHAFT, 38440 Wolfsburg (DE); MAN Truck & Bus SE, 80995 München (DE)
(72) Erfinder: Alieiev, Roman, 39576 Stendal (DE); Jornod, Guillaume, 10245 Berlin (DE)
(74) Vertreter: Rittner, Karsten

(56) Entgegenhaltungen:
- DE-A1-102017 204 326
- JORNOD GUILLAUME ET AL: "Environment-Aware Communications for Cooperative Collision Avoidance Applications", 2018 IEEE 19TH INTERNATIONAL SYMPOSIUM ON "A WORLD OF WIRELESS, MOBILE AND MULTIMEDIA NETWORKS" (WOWMOM), IEEE, 12. Juni 2018 (2018-06-12), Seiten 588-599, XP033394285, DOI: 10.1109/WOWMOM.2018.8449742 [gefunden am 2018-08-28]

## Beschreibung

Der Vorschlag betrifft ein Verfahren zur vorausschauenden Schätzung der Übertragungsbedingungen für eine Kommunikation zwischen zwei Kommunikationspartnern, eine entsprechende Vorrichtung zur Durchführung von Verfahrensschritten des Verfahrens, ein Fahrzeug sowie ein Computerprogramm. Das Verfahren kann insbesondere bei der Vorhersage der Übertragungsbedingungen für eine geplante Fahrzeugdirektkommunikation eingesetzt werden.

Für das Szenario von Fahrzeugen, die mit drahtlosen Kommunikationsmodulen ausgestattet sind, die auf öffentlichen Straßen direkt miteinander kommunizieren, sei es für ein kooperatives oder autonomes Fahrszenario, ist eine sehr hohe Zuverlässigkeit sehr wichtig. Techniken für die Fahrzeug-zu-Fahrzeug-Direktkommunikation (V2V) wurden entwickelt und werden weiter entwickelt. Als Beispiel sei die direkte Fahrzeugkommunikation über WLAN genannt. Als Beispiel wird die dezentrale Variante nach dem WLAN-Standard IEEE 802.11p für die V2V-Kommunikation entwickelt. Zur Kommunikation zwischen Fahrzeugen werden nach dieser Technik Ad-hoc-Funknetzwerke eingerichtet (Kommunikation in der "Ad-hoc-Domäne").

Fahrzeugkommunikation ist aber auch im Bereich der Mobilfunknetze möglich. Der Begriff Mobilkommunikationsnetzwerk bedeutet hier ein anbieterbasiertes Mobilkommunikationsnetzwerk, mit anderen Worten ein zentralisiertes und verwaltetes Mobilnetzwerk. Ein anderer Begriff für ein mobiles Kommunikationsnetzwerk ist ein mobiles Kommunikationssystem, beide Begriffe sollen in diesem Text Synonyme sein. Bei dieser Technik wird das Netz in Mobilfunkzellen eingeteilt, denen jeweils eine Basisstation zugeordnet ist, die die Mobilfunkzelle versorgt. Die einzelnen Teilnehmer sind bei der Basisstation angemeldet. Ihnen werden bestimmte Kommunikationsressourcen zugewiesen, auf denen sie Daten mit der Basisstation austauschen können. Seit der 4. Mobilfunkgeneration wird die direkte Fahrzeug-Fahrzeug-Kommunikation ermöglicht. Dabei kommunizieren die Fahrzeuge direkt untereinander. Die Verwaltung der Kommunikationsressourcen, die für die Fahrzeug zu Fahrzeug-Kommunikation verwendet werden, obliegt aber der Basisstation. Dies ist der Bereich, in dem die Kommunikation im sogenannten "Infrastructure Domain" stattfindet. Bei der Long Term Evolution (LTE) - Technologie heißt diese Variante LTE V (für Fahrzeug), in der 5G-lnitiative heißt diese Variante Device-to-Device-Kommunikation (D2D). Dies ist auch der Bereich der Fahrzeugkommunikation, mit dem sich die vorliegende Erfindung befasst.

Typische Kommunikationsszenarien für die Fahrzeug zu Fahrzeug-Kommunikation sind Sicherheitsszenarien, Verkehrseffizienz und Infotainment-Szenarien. Im Sicherheitsbereich werden die folgenden Beispielszenarien aufgerufen: "Cooperative Forward Collision Warning", "Pre-Crash-Erkennung / Warnung", "High-Density Platooning". In diesen Bereichen tauschen die Fahrzeuge untereinander Informationen wie Position, Bewegungsrichtung und Geschwindigkeit sowie Parameter wie Größe und Gewicht aus. Andere für die Übertragung wichtige Informationen sind z.B. Absichtsinformationen, wie "Fahrzeug beabsichtigt zu überholen", "Fahrzeug dreht links / rechts" usw., die für das kooperative Fahren interessant sind. Hier werden oft Sensordaten übertragen. Wenn eine Gefahr vorhanden ist und der Fahrer nicht reagiert, könnte das Fahrzeug automatisch langsamer werden, sodass ein Unfall verhindert oder zumindest die Folgen des unvermeidlichen Unfalls minimiert werden. Im Bereich "Platooning", dies betrifft das Fahren in einem Konvoi, werden auch Nachrichten ausgetauscht. Typischerweise wird der ganze Konvoi von einem als Führungsfahrzeug konfigurierten Fahrzeug aus gesteuert. Beispielsweise ist eine Rückmeldung von Informationen über ein beabsichtigtes Bremsmanöver von vorne nach hinten geplant, um Auffahrunfälle zu vermeiden.

Daneben gibt es den großen Bereich der Kommunikation zu Infotainment-Zwecken, wo der Internet-Zugang im Vordergrund steht. Der Internetzugang ist für eine Vielzahl von Multimedia-Diensten wichtig.

Zurzeit sind folgende mobile Kommunikationstechnologien anwendbar: 3GPP-basiertes UMTS, HSPA, LTE und die kommenden 5G-Standards. Für die direkte V2V-Kommunikation sind LTE V und 5G D2D genannt.

Die Auflistung zeigt, dass insbesondere für sicherheitskritische Kommunikation zeitkritische Datenübertragungen stattfinden. Umgekehrt bestehen bei zeitkritischen Sicherheitsszenarien sehr hohe Anforderungen bzgl. der funktionalen Sicherheit. Diese verbieten oft den durchgehenden Einsatz von Techniken, die auf zeitkritischen Datenübertragungen beruhen.

Es gibt Ansätze, die versuchen, die Stabilität der zeitkritischen Datenübertragungen zu verbessern. Ein Ansatz betrifft das Konzept der sogenannten "sensor aware predictive communication". Dieser Ansatz beruht darauf, dass Detailkenntnisse über die Umgebung vorliegen, in der die geplante Kommunikation stattfindet. Insbesondere ist es interessant zu wissen, ob die Kommunikation durch statische oder dynamische Signalstreuungen beeinträchtigt werden wird. Die Erfassung der Umgebung erfolgt dabei mit bordeigenen Umfelderfassungssensoren.

Ein anderer Ansatz betrifft das Konzept der sogenannten Agile Quality of Service Adaptation AQoSA. Dieses Konzept betrifft eine Schleife, in der die Applikation ihre QoS-Anforderungen hinsichtlich der Kommunikationszuverlässigkeit an das Kommunikationssystem stellt, das Kommunikationssystem darauf antwortet und der Applikation mitteilt, wie es die QoS-Bedingungen für den gewünschten Zeitraum abschätzt. Die Applikation hat dann Zeit, ihre Einstellungen an die mitgeteilten QoS-Bedingungen anzupassen. Sie kann dann die geplante sicherheitskritische Operation dann doch durchführen mit den passenden Einstellungen. Die Schleife wird dann jeweils für einen weiteren Abschnitt durchlaufen. Obwohl das AQoSA-Konzept hauptsächlich für die normale zelluläre Mobilfunkkommunikation (Uplink, Downlink) gedacht war, ist es doch auch für die Sidelink-Kommunikation einsetzbar. Dabei kommunizieren aber die Kommunikationspartner (Fahrzeuge) untereinander. Die QoS-Anforderung geht dann nicht an die Basisstation, sondern direkt an ein oder mehrere Fahrzeuge. Die Technik bringt dann einen Vorteil, wenn die QoS-Bedingungen mit einem Vorhersage-Horizont in der Größenordnung von einer Sekunde oder mehr zuverlässig genug abgeschätzt werden können.

Bei den neueren Mobilkommunikations-Standards (3GPP Release 12 und höher, d.H. LTE-V und die kommende Mobilfunkgeneration 5G) wird das zellulare Konzept aufgeweicht, um eine direkte Fahrzeug zu Fahrzeug-Kommunikation (Sidelink-Kommunikation) zu ermöglichen.

In der Mobilkommunikation ist das Ressourcenmanagement ein sehr wichtiger Aspekt, um effiziente Mehrfachzugriffsschemata zu erreichen. Sobald periodisch wiederkehrende Daten übertragen werden müssen, ist es effizienter, Übertragungsressourcen für die Übertragung dieser Daten zuzuordnen und der sendenden Station Übertragungsressourcen zuzuordnen. Diese Aufgabe wird in heutigen Mobilfunkkommunikationsstandards einer Verwaltungseinheit zugeordnet, die auch unter dem Begriff "Scheduler" bekannt ist. Diese Verwaltungseinheit ist typischerweise in der Basisstation einer mobilen Kommunikationszelle angeordnet. In dem LTE-Mobilkommunikationssystem wird die Basisstation als "evolved Node Basis", kurz eNodeB bezeichnet. Dieses sogenannte "Scheduling" des Mobilfunkbetreibers bestimmt, welche Frequenzressource zu welcher Zeit für die direkte Kommunikation verwendet werden kann.

Der Scheduler ist üblicherweise eine Softwarekomponente in der Basisstation und informiert jeden Teilnehmer, zu welchem Zeitpunkt und auf welchen Frequenzen des Übertragungsrahmens er bestimmte Daten senden darf. Ihre Hauptaufgabe besteht in der gerechten Verteilung der Übertragungsressourcen auf die verschiedenen Teilnehmer. Somit werden Kollisionen in beiden Übertragungsrichtungen von einem Teilnehmer (Uplink) zu einem Teilnehmer (Downlink) vermieden und der Verkehr wird reguliert, was einen effizienteren Zugang zu einer Vielzahl von Benutzern ermöglicht.

Nun ist es aber so, dass die Übertragungsbedingungen von Zeit zu Zeit stark schwanken können, dies umso mehr als es sich bei der Fahrzeug-zu-Fahrzeug-Kommunikation um einen hochdynamischen Vorgang handelt. Die Fahrzeuge sind beweglich und es ändert sich ständig die Umgebung. Die Abstände der Kommunikationspartner untereinander ändern sich laufend. Die Verkehrsdichte spielt eine Rolle und ändert sich ebenfalls laufend. So kann es passieren, dass von einem Moment zu dem nächsten die beiden Fahrzeuge, die vorher noch unter Direktsichtverbindungen kommunizieren konnten, ein oder mehrere Fahrzeuge zwischen sich haben, die ebenfalls kommunizieren. Also ändern sich die Übertragungsbedingungen laufend. Ziel ist es, für sicherheitskritische Anwendungen die Übertragungsbedingungen im Voraus besser abzuschätzen.

Für die sofortige Kanalschätzung gibt es bereits verschiedene Methoden. Als Beispiele werden genannt die Methoden "Least Square Estimation" (LSE), und Minimum Mean Square Estimation (MMSE). Als weitere Beispiele werden Channel Prediction (CP)-basierte Methoden genannt. Bei den CP-basierten Methoden wird die Kanalvorhersage normalerweise auf der Basis der einfachen Extrapolation von aktuellen und vergangenen geschätzten Werten in die Zukunft erstellt. Einige Ansätze berücksichtigen auch die Eigenschaften der Kanalstatistik, um die Vorhersage zuverlässiger zu machen. Ein weiteres Problem besteht darin, dass z.B. die Genauigkeit bei der Verwendung von Spline-Interpolations-Rechenmethoden hochgradig von der Dynamik der Umgebungsbedingungen abhängt.

Es gibt auch neuere sensorbasierte Kanalschätzungs-Ansätze, die auch die Umgebungsbedingungen mit erfassen und daraus Schlüsse ziehen, was das Auftreten von statischen oder dynamischen Reflexionen betrifft, um so eine bessere Vorhersage über die Kanalbedingungen zu machen. Mit diesen Methoden wird eine genauere Kanalschätzung erzielt und es kann eine relative kurzzeitige Kanal-Vorhersage gemacht werden. Die Genauigkeit dieser Vorhersage ist aber an die Genauigkeit der Umgebungserfassung mit den eingesetzten Sensoren gekoppelt und an die Fähigkeit des Systems, die Lage des korrekt erfassten Objektes in die Zukunft zu projizieren.

Die beiden erstgenannten Methoden basieren auf in situ Messungen, die es aber nicht erlauben, die zukünftigen Übertragungsbedingungen für zwei Kommunikationspartner, die sich laufend fortbewegen, mit großer Genauigkeit abzuschätzen.

Aus der DE 10 2015 214 968 A1 ist es bekannt, für eine bessere Schätzung der Kanalqualität bei der Fahrzeug-zu-Fahrzeug-Kommunikation den Einfluss des Umfeldes mit zu berücksichtigen. Es können z.B. Reflexionen an größeren Häusern auftreten, die zu Mehrwegeempfang führen. Es wird die Geschwindigkeit des mobilen Teilnehmers ermittelt und daraus ein Bewegungsvektor bestimmt. Sodann wird die Position des mobilen Teilnehmers für einen zukünftigen Zeitpunkt t₁ geschätzt. Dies erlaubt unter Einsatz eines Umfeld-Modells eine verbesserte Genauigkeit der Schätzung der Kanalqualität zum Zeitpunkt t₁.

Aus der EP 2 789 139 B1 ist ein Verfahren zur Multi-Hop-Weiterleitung von Datenpaketen in Fahrzeug-Ad-hoc-Netzwerken offenbart. Jeder Knoten kennt sowohl seine eigenen Koordinaten als auch die geografischen Koordinaten des Ziels. Die Koordinaten der Kommunikationspartner, die nur einen Sprung (Hop) entfernt sind, werden von periodisch gesendeten Cooperative-Awareness-Messages (CAMs) erhalten.

Der Artikel von G. Jornod et al.: "Environment-Aware Communications for Cooperative Collision Avoidance Applications", 2018 IEEE 19th International Symposium on "A World of Wireless, Mobile and Multimedia Networks", offenbart ein Verfahren zum kooperativen Fahren, bei dem dynamische Parameter eines V2V-Kommunikationskanals abgeschätzt werden. Bei dem Verfahren werden Informationen über absolute dynamische Eigenschaften von Objekten in der Umgebung und deren relative Änderungen gesammelt. Zu diesem Zweck wird im Rahmen von kooperativer Wahrnehmung auf die Daten lokaler und entfernter Sensoren zurückgegriffen.

Die Erfindung setzt sich zur Aufgabe, eine Lösung zu finden für das Problem, bei sicherheitskritischen Anwendungen im Bereich der Fahrzeug-zu-Fahrzeug-Kommunikation die Übertragungsbedingungen im Voraus besser abzuschätzen. Die Lösung soll primär die Sicherheitsanforderungen erfüllen.

Diese Aufgabe wird durch ein Verfahren zur vorausschauenden Schätzung der Übertragungsbedingungen für eine Kommunikation zwischen zwei Kommunikationspartnern gemäß Anspruch 1, eine Vorrichtung zur Durchführung von Verfahrensschritten des Verfahrens gemäß Anspruch 10, ein Fahrzeug gemäß Anspruch 11 und ein Computerprogramm gemäß Anspruch 12 gelöst.

Die abhängigen Ansprüche beinhalten vorteilhafte Weiterbildungen und Verbesserungen der Erfindung entsprechend der nachfolgenden Beschreibung dieser Maßnahmen.

Um das Problem zu lösen, wird vorgeschlagen, den Verkehrsfluss zu beobachten und eine Vorhersage über zukünftige Kanalbedingungen zu erlangen, indem die Kanalschätzungsergebnisse von vorausfahrenden Kommunikationspartnern für die Schätzung der zukünftigen Kanalbedingungen herangezogen werden. Hier kann das Kanalschätzungsergebnis von einem Kommunikationspartner herangezogen werden. Es können aber auch die Kanalschätzungsergebnisse von mehreren Kommunikationspartnern herangezogen werden.

Das vorgeschlagene Verfahren zur vorausschauenden Schätzung der Übertragungsbedingungen für eine Kommunikation zwischen zwei Kommunikationspartnern, die sich entlang einer Fahrbahn bewegen, besteht darin, dass die Kommunikationspartner die aktuellen Übertragungsbedingungen jeweils selbst abschätzen und dabei die geschätzten Übertragungsbedingungen von vorausfahrenden Kommunikationspartnern nutzen, um die Übertragungsbedingungen für einen zukünftigen Zeitpunkt abzuschätzen. Dies ermöglicht die Erhöhung der Genauigkeit für die vorausschauende Schätzung der Übertragungsbedingungen. Das Verfahren ist vor allem einsetzbar in Situationen, wo ein relativ homogener Verkehrsfluss besteht oder in Fällen wobei eine geplante Fahrzeug-zu-Fahrzeug Kommunikation eingesetzt wird. In der Situation eines homogenes Verkehrsflusses ergebt es sich häufig, dass die Fahrzeuge mit ähnlichem Abstand unterwegs sind. Ein prominentes Beispiel bei dem geplante Fahrzeug-zu-Fahrzeug Kommunikationen eingesetzt werden ist der Einsatzfall des sogenannten "Platooning".

Dieses Verfahren kann durch verschiedene Maßnahmen verfeinert und erweitert werden. In einer Variante führt wenigstens einer der nachfolgenden Kommunikationspartner einen Schritt der sensorischen Erfassung der Umgebung durch und ermittelt, ob ähnliche Rahmenbedingungen für die Fahrzeugdirektkommunikation zwischen den vorausfahrenden Kommunikationspartnern vorliegen. Dabei wird in einer Variante berücksichtigt, ob sich die vorausfahrenden Kommunikationspartner in einem ähnlichen Abstand fortbewegen wie die beiden nachfolgenden Kommunikationspartner. Dies ist sinnvoll, da die Übertragungsbedingungen nämlich sehr stark mit dem Abstand zwischen den Kommunikationspartnern variieren können.

Es ist vorteilhaft für das Verfahren, wenn einer der Kommunikationspartner wenigstens einen der vorausfahrenden Kommunikationspartner in einer Anforderungs-Nachricht dazu auffordert, die ihrerseits abgeschätzten aktuellen Übertragungsbedingungen zu den nachfolgenden Kommunikationspartnern zu berichten, wenn ermittelt wurde, dass die vorausfahrenden Kommunikationspartner wenigstens die Abstandsbedingung erfüllen. So können gezielt die Messergebnisse von vorausfahrenden Kommunikationspartnern ausgewählt werden.

In einer anderen Variante berichtet einer der vorausfahrenden Kommunikationspartner wenigstens die abgeschätzten aktuellen Übertragungsbedingungen periodisch zu den nachfolgenden Kommunikationspartnern. Dies kann per Broadcast-Übertragungsmode geschehen. Hier erhalten die nachfolgenden Kommunikationspartner Berichte, ohne dass eine Aufforderung gesendet werden muss. Es entfällt der entsprechende Verwaltungsaufwand für die Sendung von Anforderungsnachrichten und deren Antworten. Allerdings ist es schwieriger, aus der Fülle der Berichte die passenden auszuwählen und es wird mehr Datenverkehr für die Fahrzeugdirektkommunikation verursacht.

In einer erweiterten Ausführungsform wird von einem Kommunikationspartner nach sensorischer Erfassung wenigstens die Entfernung zu den vorausfahrenden Kommunikationspartnern ermittelt und daraus einen Zeitpunkt berechnet, für den die Übertragungsbedingungen vorhergesagt werden. Dadurch wird erreicht, dass die nachfolgenden Fahrzeuge zu diesem Zeitpunkt an gleicher/ähnlicher Position sein werden und vergleichbare Übertragungsbedingungen vorliegen werden, weil wenigstens die statischen Umfeldobjekte sich an gleicher/ähnlicher Position befinden werden.

Bei einer weiteren Verbesserung des Verfahrens werden von einem der Kommunikationspartner nach der sensorischen Erfassung der Umgebung mögliche Probleme mit Signalstreuungen ermittelt und die zukünftigen Übertragungsbedingungen unter Berücksichtigung der Signalrückstreuungen abgeschätzt. Dies ist besonders vorteilhaft, weil die eigene Fahrzeug-zu-Fahrzeug-Kommunikation von solchen Signal-Reflexionen beeinträchtigt werden kann. Es kann zu Mehrwegeempfang kommen und zu einer möglichen Auslöschung der Signale.

Für eine weitere Steigerung der Genauigkeit ist es sehr vorteilhaft, wenn die Kommunikationspartner die selbst abgeschätzten Übertragungsbedingungen mit den von den vorausfahrenden Kommunikationspartnern berichteten Übertragungsbedingungen fusionieren. Es handelt sich um den Einsatz der Technik der Datenfusion, die sich zur Erhöhung der Genauigkeit durch Überlagerung der Informationen von verschiedenen unabhängigen Quellen eignet.

Hier ist es weiterhin vorteilhaft, wenn der Kommunikationspartner die Übertragungsbedingungen mehrfach hintereinander selbst abschätzt und vor dem Schritt der Fusionierung überprüft, ob die mehrfach selbst abgeschätzten zukünftigen Übertragungsbedingungen konvergieren und ebenfalls überprüft, ob die von den vorausfahrenden Kommunikationspartnern mehrfach hintereinander berichteten Übertragungsbedingungen konvergieren und der Schritt der Fusionierung dann durchgeführt wird, wenn in beiden Fällen die Abschätzergebnisse konvergieren. Dies ermöglicht einen Vorabtest, der die Information liefert, ob der rechenintensive Schritt der Datenfusion für die Verbesserung der Vorhersagegenauigkeit hilfreich sein wird. Wenn die Messreihen nicht konvergieren, kann die Datenfusion ausgelassen werden.

Für eine Vorrichtung zur Durchführung von Verfahrensschritten des Verfahrens entsprechend des Vorschlages ist es vorteilhaft, wenn die Vorrichtung mit wenigstens einer Prozessoreinrichtung ausgestattet ist, die dafür eingerichtet ist, die entsprechenden Verfahrensschritte durchzuführen. Es wird eine Vorrichtung so ausgelegt, dass sie wenigstens die notwendigen Verfahrensschritte aus Sicht eines Kommunikationspartners durchführen kann. In einer anderen Variante wird die Vorrichtung so ausgelegt, dass sie die Schritte eines Kommunikationspartners sowohl der vorausfahrenden wie auch der nachfolgenden Fahrzeuge durchführen kann.

Eine weitere Ausführungsform der Erfindung besteht in einem Fahrzeug, das eine entsprechende Vorrichtung zur Durchführung des Verfahrens aufweist.

Weiterhin kann der Vorschlag als Computerprogramm realisiert werden. Dieses Computerprogramm weist einen Programmcode auf, der zur Abarbeitung in einer Prozessoreinrichtung kommt und dabei die Verfahrensschritte des beanspruchten Verfahrens durchführt.

Ein Ausführungsbeispiel der Erfindung ist in den Zeichnungen dargestellt und wird nachfolgend anhand der Figuren näher erläutert.

Es zeigen:
Fig. 1 das Prinzip der Fahrzeug-zu-Fahrzeug-Kommunikation zwischen zwei Fahrzeugen, die sich hintereinander auf einer Fahrbahn bewegen und über einen Sidelink-Kanal eines Mobilfunksystems untereinander kommunizieren;
Fig. 2 ein typisches Blockdiagramm der Kfz-Elektronik des Fahrzeuges;
Fig. 3 eine Illustration, die den Vorgang der Abschätzung der zukünftigen Übertragungsbedingungen für eine geplante Fahrzeug-zu-Fahrzeug-Kommunikation verdeutlicht, und
Fig. 4 ein Blockdiagramm für die Funktion der Abschätzung der zukünftigen Übertragungsbedingungen bzgl. einer Fahrzeug-zu-Fahrzeug-Kommunikation.

Die vorliegende Beschreibung veranschaulicht die Prinzipien der erfindungsgemäßen Offenbarung. Es versteht sich somit, dass Fachleute in der Lage sein werden, verschiedene Anordnungen zu konzipieren, die zwar hier nicht explizit beschrieben werden, die aber Prinzipien der erfindungsgemäßen Offenbarung verkörpern und in ihrem Umfang ebenfalls geschützt sein sollen.

Die in den Ansprüchen definierten Elemente, die als ein Mittel zum Ausführen einer spezifizierten Funktion ausgedrückt werden, sollen irgendeine Art des Ausführens dieser Funktion umfassen, einschließlich zum Beispiel a) eine Kombination von Schaltungselementen, die diese Funktion ausführen, oder b) Software in irgendeiner Form, einschließlich Firmware, Mikrocode oder dergleichen, kombiniert mit geeigneten Schaltungen zum Ausführen dieser Software zum Ausführen der Funktion.

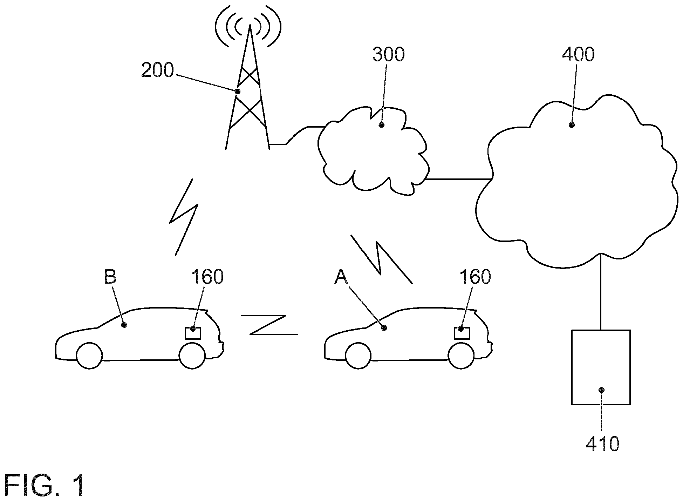

Fig. 1 zeigt die Systemarchitektur für die Realisierung einer Fahrzeug-zu-Fahrzeug-Kommunikation über einen von einem Mobilfunk-Kommunikationssystem bereitgestellten Sidelink-Übertragungskanal. Das Bezugszeichen 200 bezeichnet eine Basisstation eNodeB (evolved Node Basis) eines LTE-Mobilkommunikationsdienstanbieters.

Die Basisstation 200 in Fig. 1 ist nahe einer Hauptstraße positioniert, auf der Fahrzeuge fahren. Es sind zwei Fahrzeuge A und B gezeigt, die auf einer Fahrspur einer Fahrbahn in einem Abstand hintereinander herfahren. Dargestellt sind Pkws, es können aber auch beliebige andere Fahrzeuge sein. Beispiele von weiteren Fahrzeugen sind: Busse, Nutzfahrzeuge, insbesondere Lastkraftwagen Lkw, Motorräder, Landmaschinen, Baumaschinen, Schienenfahrzeuge, inklusive Roboter und Drohnen, usw. Der Einsatz der Erfindung wäre allgemein bei Landfahrzeugen, Schienenfahrzeugen, Wasserfahrzeugen und Luftfahrzeugen möglich.

In der Fig. 1 ist sowohl die Fahrzeug-zu-Fahrzeug-Direktkommunikation über Sidelink-Kanal angedeutet, wie auch die übliche Mobilfunk-Kommunikation in Uplink- und Downlink-Richtung, die über die Mobilfunk-Basisstation 200 und weiter über das Kommunikationsnetzwerk des Mobilfunkbetreibers 300, das bei LTE als Evolved Packet Core EPC bezeichnet wird. Weiterhin wird über die Routing-Technik auch das Internet 400 mit eingebunden, sodass auch eine Kommunikation mit einer im Internet erreichbaren externen Zentralrechnereinheit 410 möglich ist.

In der Terminologie von LTE entspricht ein mobiles Endgerät einem Benutzergerät UE (user equipment), das es einem Benutzer ermöglicht, auf Netzwerkdienste zuzugreifen, wobei es über die Funkschnittstelle mit dem UTRAN oder E-UTRAN verbunden ist. Typischerweise entspricht ein solches Benutzergerät einem Smartphone. Es gibt auch Benutzergeräte, die in Fahrzeugen eingebaut werden. Dafür werden die Fahrzeuge mit einer On-Board-Connectivity Unit 160 (OCU) ausgestattet, wie in Fig. 1 gezeigt. Diese On-Board-Connectivity Unit 31 entspricht einem LTE-Kommunikationsmodul, mit dem das Fahrzeug mobile Daten empfangen kann und solche Daten senden kann.

Die Basisstationen sind über eine sogenannte S1-Schnittstelle mit dem EPC 300 verbunden. Die verschiedenen Schnittstellen der LTE-Netzwerkarchitektur sind standardisiert. Es wird insbesondere auf die verschiedenen LTE-Spezifikationen verwiesen, die öffentlich verfügbar sind.

Solche Mobilfunktechnologien sind standardisiert und es wird hier auf die entsprechenden Spezifikationen von Mobilfunkstandards verwiesen. Als modernes Beispiel für einen Mobilfunkstandard wird auf die 3GPP-Initiative und den LTE-Standard (Long Term Evolution) verwiesen. Viele der zugehörigen ETSI-Spezifikationen sind derzeit in der Version 14 verfügbar. Als Beispiel aus Version 13 wird folgendes genannt: ETSI TS 136 213 V13.0.0 (2016-05); es handelt sich um einen weiterentwickelten universellen terrestrischen Funkzugang (E-UTRA); Bitübertragungsschicht (3GPP TS 36.213 Version 13.0.0 Release 13).

LTE steht für hohe Übertragungsraten und kurze Antwortzeiten. Die Erhöhung der Übertragungsrate wird in LTE durch bessere Modulationsverfahren, flexiblere Frequenznutzung und größere Kanalbandbreiten erreicht. Gemäß der Spezifikation hat LTE derzeit eine Übertragungsrate von mehr als 300 MBit / s im Downlink und 75 MBit / s im Uplink pro 20 MHz-Band, mathematisch und weniger Overhead.

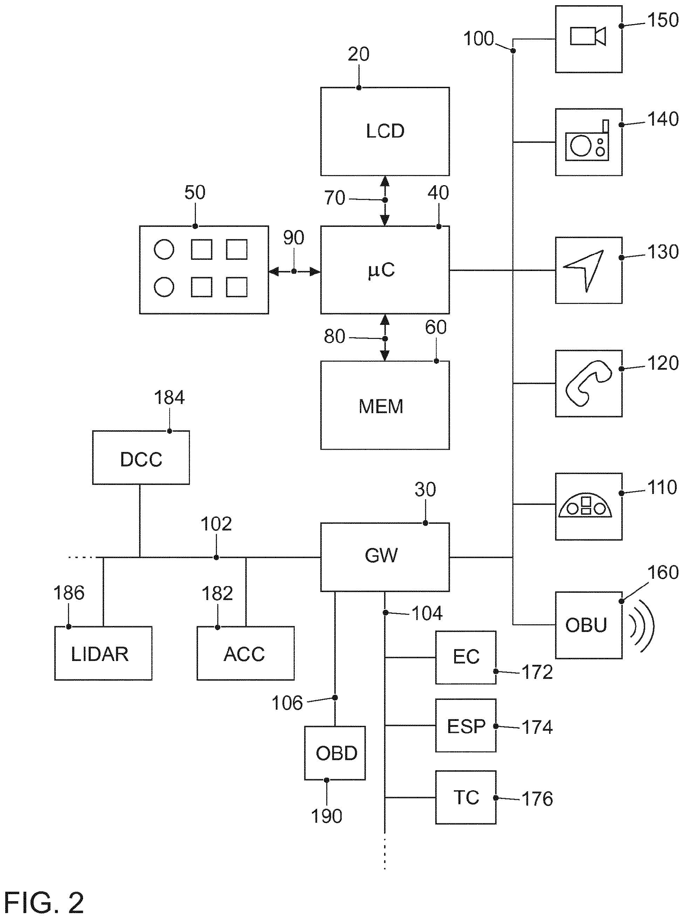

Fig. 2 zeigt schematisch ein Blockschaltbild der Kfz-Elektronik sowie beispielhaft einige Teilsysteme oder Applikationen des Infotainment-Systems. Das Infotainment-System umfasst neben weiteren Komponenten: die berührungsempfindliche Anzeigeeinheit 20, eine Recheneinrichtung 40, eine Eingabeeinheit 50 und einen Speicher 60. Die Anzeigeeinheit 20 umfasst sowohl eine Anzeigefläche zum Anzeigen veränderlicher grafischer Informationen als auch eine über der Anzeigefläche angeordnete Bedienoberfläche (berührungssensitive Schicht) zum Eingeben von Befehlen durch einen Benutzer.

Die Anzeigeeinheit 20 ist über eine Datenleitung 70 mit der Recheneinrichtung 40 verbunden. Die Datenleitung kann nach dem LVDS-Standard ausgelegt sein, entsprechend Low Voltage Differential Signalling. Über die Datenleitung 70 empfängt die Anzeigeeinheit 20 Steuerdaten zum Ansteuern der Anzeigefläche des Touchscreens 20 von der Recheneinrichtung 40. Über die Datenleitung 70 werden auch Steuerdaten der eingegebenen Befehle von dem Touchscreen 20 zu der Recheneinrichtung 40 übertragen. Mit der Bezugszahl 50 ist die Eingabeeinheit bezeichnet. Ihr zugehörig sind die schon erwähnten Bedienelemente wie Tasten, Drehregler, Schieberegler oder Drehdrückregler, mit deren Hilfe die Bedienperson über die Menüführung Eingaben machen kann. Unter Eingabe wird allgemein das Anwählen einer ausgewählten Menüoption verstanden, wie auch das Ändern eines Parameters, das Ein- und Ausschalten einer Funktion usw.

Die Speichereinrichtung 60 ist über eine Datenleitung 80 mit der Recheneinrichtung 40 verbunden. In dem Speicher 60 ist ein Piktogrammverzeichnis und/oder Symbolverzeichnis hinterlegt mit den Piktogrammen und/oder Symbolen für mögliche Einblendungen von Zusatzinformationen.

Die weiteren Komponenten des Infotainment-Systems Kamera 150, Radio 140, Navigationsgerät 130, Telefon 120 und Kombiinstrument 110 sind über den Datenbus 100 mit der Vorrichtung zur Bedienung des Infotainment-Systems verbunden. Als Datenbus 100 kommt die Highspeed-Variante des CAN-Bus nach ISO Standard 11898-2 in Betracht. Alternativ käme z.B. auch der Einsatz eines auf Ethernet-Technologie beruhenden Bussystems wie IEEE 802.03cg in Frage. Auch Bussysteme, bei denen die Datenübertragung über Lichtwellenleiter geschieht, sind einsetzbar. Als Beispiele werden genannt der MOST Bus (Media Oriented System Transport) oder der D2B Bus (Domestic Digital Bus). Für die drahtlose Kommunikation nach innen und außen ist das Fahrzeug 10 mit dem bereits erwähnten Kommunikationsmodul 160 ausgestattet. Es kann für die Mobilfunk-Kommunikation, z.B. nach LTE Standard, entsprechend Long Term Evolution, ausgelegt sein. Ebenfalls kann es für WLAN-Kommunikation, entsprechend Wireless LAN, ausgelegt sein, sei es für die Kommunikation zu Geräten der Insassen im Fahrzeug oder für eine über WLAN-p realisierte Fahrzeug-zu-Fahrzeug Kommunikation.

Der Kommunikationsbus 100 des Infotainment-Systems ist mit einem Gateway 30 verbunden. Daran angeschlossen sind auch die anderen Teile der Kfz-Elektronik. Zum einen der Kommunikationsbus 104 des Antriebstrangs, der typischerweise in Form des CAN-Bus realisiert wird. Als Beispiele sind die Steuergeräte des Antriebstrangs Motorsteuergerät 172, ESP-Steuergerät 174 und Getriebesteuergerät 176 genannt und gezeigt. Weiter der Kommunikationsbus 102 für Fahrerassistenzsysteme, der in Form des FlexRay-Busses ausgebildet sein kann. Dabei sind zwei Fahrerassistenzsysteme dargestellt: ein Fahrerassistenzsystem 182 zur automatischen Abstandsregelung ACC entsprechend Adaptive Cruise Control, ein Fahrerassistenzsystem DCC zur adaptiven Fahrwerksregelung 184, entsprechend Dynamic Chassis Control und ein LIDAR-Sensor 186, entsprechend Light Detection and Ranging. Weiterhin ist noch ein Kommunikationsbus 106 an das Gateway 30 angeschlossen. Dieser verbindet das Gateway 30 mit einer On-Board Diagnoseschnittstelle 190. Die Aufgabe des Gateway 30 besteht darin, die Formatumwandlungen für die verschiedenen Kommunikationssysteme 100, 102, 104, 106 zu machen, sodass untereinander Daten ausgetaucht werden können. Im gezeigten Ausführungsbeispiel macht das Fahrerassistenzsystem DCC für die Fahraufgabe von einer hochgenauen Umgebungskarte Gebrauch. Die Umgebungskarte kann in einer ersten Ausführungsform vorab in einem Speicher des Fahrerassistenzsystems DCC abgespeichert werden. Dazu wird sie üblicherweise über das Kommunikationsmodul 160 geladen, von dem Gateway 30 weitergeleitet und in den Speicher des Fahrerassistenzsystem 184 geschrieben. In einer anderen Variante wird nur ein Ausschnitt einer Umgebungskarte geladen und in den Speicher des Fahrerassistenzsystems geschrieben. Dies ermöglicht es, dass ein kleinerer Speicher in dem Fahrerassistenzsystem 184 vorgesehen werden kann und verringert die Kosten.

Die Fahrzeuge A, B sind mit den beiden Umgebungssensoren Videokamera 150 und LIDAR-Sensor 186 ausgestattet. Typischerweise sind sogar mehrere Videokameras 150 (Front-Kamera, Heck-Kamera, Seitenkamera links, Seitenkamera rechts) in dem Fahrzeug 10 verbaut. So ist es möglich, durch Bildverarbeitung eine Rundumsicht für das Fahrzeug 10 zu erzeugen. Der LIDAR-Sensor 186 wird typischerweise im Frontbereich des Fahrzeuges 10 verbaut und erfasst die Umgebung in Fahrtrichtung des Fahrzeuges A, B. Daneben könnten auch noch Ultraschallsensoren und RADAR-Sensoren eingesetzt werden.

Die genannten Umgebungssensoren, die in der Lage sind, das Umfeld des Fahrzeuges zu erfassen, sind für unterschiedliche Entfernungen und unterschiedliche Einsatzzwecke einzusetzen. Es gelten in etwa die folgenden Reichweiten- und Zweckangaben:
- Eine Stereo-Kamera, Reichweite 500m, dient zur Erfassung einer 3D-Karte, benutzt für einen automatischen Notbremsassistenten, Spurwechselassistenten, zur Verkehrsschilderkennung und einen Abstandsregeltempomaten.
- Kamera, Reichweite 100 m, dient zur Erfassung einer 3D-Karte, benutzt für einen automatischen Notbremsassistenten, Spurwechselassistenten, zur Verkehrsschilderkennung, einen Abstandsregeltempomaten, zur Frontaufprallwarnung, automatischer Lichtsteuerung und einen Parkassistenten.
- Ultraschallsensor, Reichweite <10m, Parkassistent.
- Radar-Sensor, Reichweite 20 cm bis 100 m, benutzt für einen automatischen Notbremsassistenten, zur automatischen Geschwindigkeitsregelung, einen Abstandsregeltempomaten, einen Totwinkelassistenten, einen Querverkehralarmgeber
- Lidar-Sensor, Reichweite 100 m, dient zur Erfassung einer 3D-Karte, benutzt für einen automatischen Notbremsassistenten.

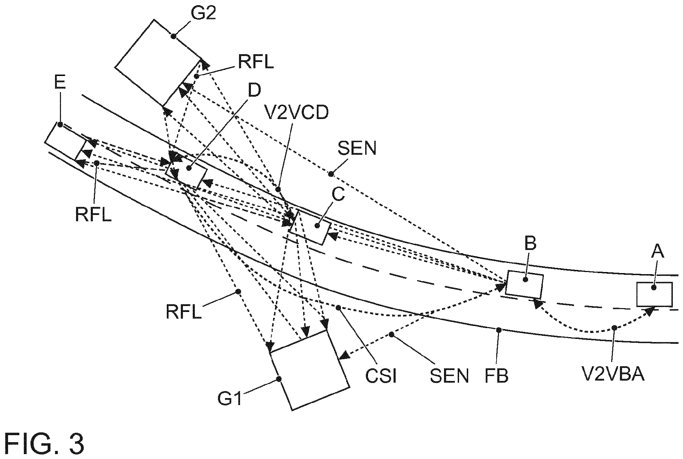

Fig. 3 zeigt eine Illustration, die den Vorgang der Abschätzung der zukünftigen Übertragungsbedingungen für eine geplante Fahrzeug-zu-Fahrzeug-Kommunikation verdeutlicht. Es gibt verschiedene Anwendungsfälle, wo eine solche geplante Fahrzeug-zu-Fahrzeug-Kommunikation eingesetzt werden kann. Ein prominentes Beispiel ist der Einsatzfall des sogenannten "Platooning".

Immer mehr Logistikunternehmen sind auf der Suche nach technischen Lösungen zur Kraftstoffeinsparung und Erhöhung der Verkehrssicherheit für ihre Betriebslastwagen. Das Fahren von Lastwagen (oder allgemein Fahrzeugen) in einem Platoon bietet die Möglichkeit auf eine Reduzierung des Kraftstoffverbrauchs durch die Verkleinerung der Abstände zwischen den Fahrzeugen, die gemeinsam in einem Platoon fahren. Es besteht ein direkter Zusammenhang zwischen dem Abstand zwischen den Platoon-Fahrzeugen und der Reduzierung des Kraftstoffverbrauchs und somit auch der Kosten.

Die Herausforderung liegt in der Minimierung des Abstandes zwischen den Fahrzeugen in einem Platoon. Dies verlangt eine Abstandsregelung mit einer genauen und zuverlässigen Referenz für die relative Abstandsmessung zwischen zwei hintereinanderfahrenden Fahrzeugen in einem Platoon. Dabei werden mehrere oder sogar viele Fahrzeuge mit Hilfe eines technischen Steuerungssystems koordiniert gesteuert, sodass sie in sehr geringem Abstand hintereinander fahren können, ohne dass die Verkehrssicherheit beeinträchtigt wird. Dies führt, insbesondere bei Lastkraftwagen, zu einer beträchtlichen Verringerung des Kraftstoffverbrauchs und zu einer beträchtlichen Verringerung von Treibhausgasen. Diese Anwendung ist aber besonders sicherheitskritisch. Es muss jederzeit gewährleistet sein, dass die Fahrzeuge der Kolonne anhalten können. Der Bremsvorgang wird koordiniert, damit alle Fahrzeuge gleichzeitig bremsen um Probleme mit einem Verrutschen der Ladung bis hin zu Kollisionen zu vermeiden. Dafür wird die Fahrzeug-zu-Fahrzeug Kommunikation eingesetzt. Es ist also erforderlich, dass die Fahrzeuge mit großer Zuverlässigkeit sicherheitsrelevante Daten austauschen können. Es wird deshalb vorgeschlagen, dass die Fahrzeuge periodisch für einen bestimmten Zeitraum, z.B. wenige Sekunden, abschätzen, ob die Übertragungsbedingungen für die geplante Anwendung noch gut genug sind.

Das ist auch für andere Anwendungen interessant. Z.B. wird als Beispiel einer weiteren Anwendung das Beispiel eines Kartenupdates genannt oder eines Software-Updates. Für diese Anwendungen ist es schon klar, wenn sie gestartet werden, dass sie längere Zeit benötigen. Dann ist es ebenfalls wichtig, eine Einschätzung bezüglich der Übertragungsbedingungen im Voraus zu bekommen.

In Fig. 3 bezeichnet die Bezugszahl FB eine Fahrbahn mit zwei Fahrspuren für eine Richtung. Auf der Fahrbahn FB bewegen sich in der rechten Fahrspur die beiden Fahrzeuge B und A in einem typischen Abstand, z.B. 25 m hintereinander her. Zwischen diesen beiden Fahrzeugen findet eine Fahrzeug-zu-Fahrzeug Kommunikation V2VBA für einen kooperativen Fahrvorgang statt. Der Anwendungsfall kann sich wieder auf das Beispiel des Platooning beziehen, wo die Fahrzeuge so kooperieren, dass sie mit möglichst geringem Abstand hintereinander herfahren. Die Fahrzeuge B, A tauschen sich darüber aus, mit welcher Geschwindigkeit sie jeweils fahren sollen, um den Abstand zu verringern. Der Datenaustausch wird hier über einen längeren Zeitraum stattfinden, sodass es nötig ist, die Übertragungsbedingungen im Voraus abzuschätzen.

Dazu erfasst das vorausfahrende Fahrzeug B die vor ihm liegende Umgebung. Dies kann entweder mit der Videokamera 150 oder dem LIDAR-Sensor 186 oder mit beiden Sensoren in Kombination erfolgen. Von beiden Sensoren werden Bilddaten geliefert, die dann mit entsprechenden Objekterkennungsalgorithmen ausgewertet werden. Diese Algorithmen werden als dem Fachmann bekannt vorausgesetzt. Die Auswertung ergibt, wie in Fig. 3 dargestellt, dass die Fahrzeuge C, D vorausfahren und dass die größeren Gebäude G1 und G2 links und rechts von der Fahrbahn im vorausliegenden Fahrabschnitt positioniert sind. Die Erfassung der vorausfahrenden Fahrzeuge C, D und der voraus positionierten Gebäude G1 und G2 ist in der Fig. 3 mit dem Bezugszeichen SEN gekennzeichnet. Was Fahrzeug B ebenfalls ermitteln kann, ist, in welchem Abstand die Fahrzeuge D und C hintereinander herfahren. Dies lässt sich durch Bildverarbeitung ebenfalls abschätzen, in dem die bekannten Abmessungen der Fahrzeuge in Relation zu der ermittelten dazwischenliegenden Strecke gesetzt werden. Mathematisch bietet sich dafür der Strahlensatz als Rechengrundlage an. Andererseits könnte der Abstand auch von den vorausfahrenden Fahrzeugen C, D gemessen werden und an das nachfolgende Fahrzeug B über eine Fahrzeug-zu-Fahrzeug Kommunikation berichtet werden. Bei hoher Verkehrsdichte ergibt es sich meist automatisch, dass die Fahrzeuge in Kolonnen mit einem relativ ähnlichen Abstand hintereinander herfahren. Die Übertragungsbedingungen sind bei der Fahrzeug-zu-Fahrzeug Kommunikation sehr stark davon abhängig in welchem Abstand die direkt miteinander kommunizierenden Fahrzeuge hintereinander herfahren. Für jede Fahrzeug-DirektKommunikation werden die tatsächlichen Übertragungsbedingungen bestimmt. Dafür gibt es bei LTE das sogenannte "CSI Reporting".

CSI steht für Channel Status Information. Wie der Name schon sagt, ist es eine Art Indikator dafür, wie gut oder schlecht der Übertragungskanal zu einer bestimmten Zeit ist. Die CSI-Information besteht aus im Wesentlichen den drei Hauptkomponenten:
- CQI (Channel Quality Indicator)
- PMI (Precoding Matrix Index)
- RI (Rank Indicator).

Nicht alle dieser Indikatoren werden für jeden CSI-Bericht gemessen. Abhängig von der Situation und der Konfiguration aus dem Netzwerk führen die Teilnehmer-Stationen unterschiedliche Kombinationen von Messungen durch. Dies ist aber bekannt und wird hier nicht genauer erläutert.

Wenn nun die beiden vorausfahrenden Fahrzeuge C und D in ähnlichem Abstand hintereinander herfahren wie die beiden Fahrzeuge B und A, so soll die CSI-Information für ihre Fahrzeug-zu-Fahrzeug Kommunikation nach dem hier vorgeschlagenen Verfahren zur Verbesserung der Vorhersage der Übertragungsbedingungen für die beiden kommunizierenden Fahrzeuge B, A genutzt werden. Die Fahrzeug-zu-Fahrzeug Kommunikation zwischen den Fahrzeugen C, D ist in der Fig. 3 mit dem Bezugszeichen V2VCD bezeichnet. Dies geschieht wie folgt.

Zunächst ermittelt das Fahrzeug B den Abstand zum vorausfahrenden Fahrzeug C. Dafür kann die gleiche Technik eingesetzt werden wie zur Ermittlung des Abstandes zwischen den Fahrzeugen C und D. Die eigene Fahrgeschwindigkeit ist dem Fahrzeug B bekannt. Aus dem ermittelten Abstand wird es dann nach der bekannten Formel S = v*t die Zeit t ermitteln, die es für das Durchfahren der Strecke S mit der Eigengeschwindigkeit v benötigt. Diese Zeit t entspricht dann dem Vorhersagezeitpunkt, für den es die Übertragungsbedingungen vorhersagen wird. Es wird aber nicht einfach nur die Messwerte von den vorausfahrenden Fahrzeugen C, D übernehmen und als eigene Abschätzung benutzen. Es wird auch noch eine aus der sensorischen Erfassung der Umgebung abgeleitete eigene Vorhersage für die zukünftigen Übertragungsbedingungen machen. Wie diese Abschätzung möglichst genau erfolgen kann, ist im Prinzip bekannt. Dieser Ansatz basiert sehr stark auf der Umgebungserfassung. Es werden die vorausliegenden Objekte ermittelt. Dabei handelt es ich um die beiden statischen Gebäude G1 und G2 und die sich bewegenden Objekte C, D, E. Fahrzeug B berechnet nun voraus, wo es sich zum ermittelten Zeitpunkt befinden wird und berechnet voraus, ob es durch Signalreflexionen durch die von ihm selbst ausgesendeten Ausstrahlungen oder die Ausstrahlungen der ihm umgebenden Fahrzeuge beeinträchtigt wird. Dabei wird durch Bewegungstrajektorien der Fahrzeuge abgeschätzt, wo sie sich dann in der Umgebung von Fahrzeug B befinden werden. Für das Fahrzeug E wird ermittelt, dass es sich zum dem gewünschten Zeitpunkt an der in Fig. 3 gezeigten Position aufhalten wird. Die umliegenden Objekte werden eingeteilt in statische Objekte und dynamische Objekte. Die dynamischen Objekte sind dann die Fahrzeuge A, B, E. Die statischen Objekte sind die Gebäude G1 und G2. Es erfolgt also eine Umfeld-Modellierung. Sodann wird ausgerechnet, ob zumindest von den eigenen Ausstrahlungen von Signalen für die Fahrzeug-zu-Fahrzeug Kommunikation durch Reflexionen, die von den erkannten Objekten in der Umgebung zurückgestreut werden, die Gefahr einer Signalstörung ausgeht. Wenn ja, werden die Übertragungsbedingungen entsprechend schlechter abgeschätzt. Die möglichen Reflexionen sind in Fig. 3 eingezeichnet und mit Bezugszeichen RFL bezeichnet. Bei den hohen Frequenzen im 5GHz-Bereich, die für die Fahrzeug-Direktkommunikation eingesetzt werden, kann von geradliniger Ausbreitung ausgegangen werden und es können die einfachen Spiegel-Gesetze angewendet werden, um die Richtung der Reflexionen zu berechnen.

Schließlich können die Fahrzeuge A und B mit diesen Informationen abschätzen, ob die geplanten Übertragungen für den vorhergesagten Zeitpunkt durch Reflexionen der eigenen Ausstrahlungen gestört sein werden. Die Fahrzeuge C und D werden die in Fig. 3 gezeigte Position ja verlassen und es kann sich bei der Analyse ergeben, dass ihre Reflexionen die eigenen Ausstrahlungen nicht mehr stören werden. Damit ergibt sich eine zukünftige Abschätzung der Übertragungsbedingungen basierend auf der sensorischen Erfassung des Umfeldes und den eigenen Auswertungen.

Weitere Details zu der Technik der sensor-basierten Vorhersage von Übertragungsbedingungen sind aus der Veröffentlichung "Sensor-Based Predictive Communication for Highly Dynamic Multi-Hop Vehicular Networks" von Roman Alieiev, Jiri Blumenstein, Roman Maršalek, Thorsten Hehn, Andreas Kwoczek, und Thomas Kürner in 2017 25th European Signal Processing Conference (EUSIPCO) bekannt.

Gemäß dem Vorschlag werden aber zusätzlich die ermittelten Übertragungsbedingungen von vorausfahrenden Fahrzeugen, die schon vorher die zukünftige Position einnehmen, benutzt, um die Genauigkeit der Schätzung der Übertragungsbedingungen weiter zu verbessern.

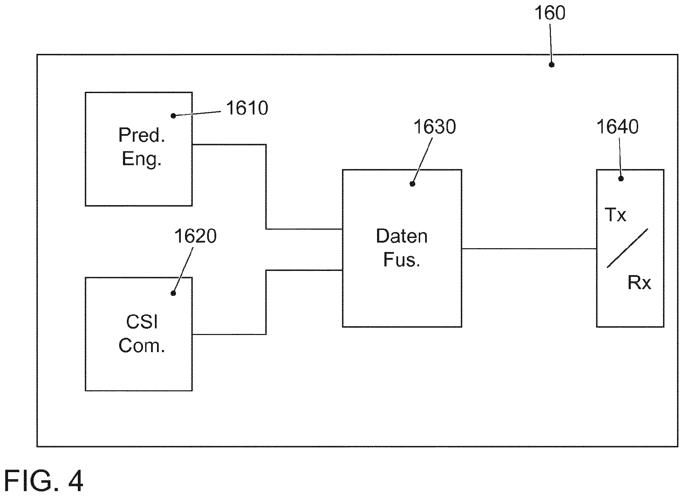

Das Blockdiagramm in Fig. 4 zeigt das Zusammenspiel verschiedener Komponenten einer On-Board Connectivity Unit 160, die aber typischerweise als verschiedene Programmteile einer angepassten Software oder einer Kombination von Software und Hardware realisiert werden. Die OCU-Einheit 160 ist mit einer entsprechend leistungsfähigen Rechnereinheit ausgestattet.

Mit der Bezugszahl 1610 ist die Vorhersageeinheit bezeichnet, die basierend auf den eigenen Sensorinformationen die Vorhersage über die Übertragungsbedingungen macht. Die Arbeitsweise dieser Vorhersageeinheit wurde zuvor bereits ausführlich erläutert.

Mit der Bezugszahl 1620 ist eine Kommunikationseinheit bezeichnet, die für die Kommunikation mit den vorausfahrenden Fahrzeugen C, D zuständig ist. Dazu erhält die Kommunikationseinheit 1620 eine Information von der Vorhersageeinheit 1610 über die Identität der vorausfahrenden Kommunikationspartner C, D, die für die Vorhersage der Übertragungsbedingungen interessant sind. Die Kommunikationseinheit 1620 bildet daraufhin eine Anforderungsnachricht für das Fahrzeug D, die über die Sende-/Empfangseinheit 1640 über eine Fahrzeug-zu-Fahrzeug-Kommunikation an das Fahrzeug D gesendet wird. Das Fahrzeug D sendet daraufhin seinen CSI-Bericht bzgl. der Kommunikation zu Fahrzeug C, wie oben bereits beschrieben. Fahrzeug D kann den Bericht einmalig, mehrmalig oder auch einfach nur periodisch senden, ohne dazu vorher aufgefordert zu werden. Bei der Variante, wo Fahrzeug D den CSI Bericht periodisch sendet, kann es sogar unterbleiben, dass Fahrzeug B die Anforderungsnachricht sendet.

Nachdem diese Information in Fahrzeug B vorliegt, werden beide unabhängigen Informationen bzgl. der Vorhersage der Übertragungsbedingungen in der Datenfusionseinheit 1630 fusioniert. Dafür wird die bekannte Technik der Datenfusion eingesetzt. Dadurch erhöht sich noch mal die Genauigkeit der Vorhersage der Übertragungsbedingungen für geplante Kommunikation zwischen den Fahrzeugen A und B beträchtlich.

In einer Variante wird vor dem Schritt der Durchführung der Datenfusion in der Fusionseinheit erst noch überprüft, ob die von der Vorhersageeinheit 1610 mehrfach hintereinander abgeschätzten Einzelergebnisse der Übertragungsbedingungen konvergieren. Das gleiche wird für die von Fahrzeug D mehrfach hintereinander übertragenen Übertragungsbedingungen gemacht. Die Datenfusion wird dann erst durchgeführt, wenn in beiden Fällen die Messreihen konvergieren.

Es ist jedenfalls verständlich, warum die Datenfusion zu einer größeren Genauigkeit führen wird. In der von der Vorhersageeinheit 1610 gemachten Vorhersage steckt auch schon der Einfluss des für den Vorhersagezeitpunkt prädizierten Fahrzeuges E. Dieses ist bei der tatsächlichen Messung des Fahrzeuges D nicht vorhanden. Dafür werden aber die tatsächlichen Verhältnisse gemessen und die Fehler bei der Umfeld-Modellierung und Bewegungsschätzung vermieden.

Alle hierin erwähnten Beispiele wie auch bedingte Formulierungen sind ohne Einschränkung auf solche speziell angeführten Beispiele zu verstehen. So wird es zum Beispiel von Fachleuten anerkannt, dass das hier dargestellte Blockdiagramm eine konzeptionelle Ansicht einer beispielhaften Schaltungsanordnung darstellt. In ähnlicher Weise ist zu erkennen, dass ein dargestelltes Flussdiagramm, Zustandsübergangsdiagramm, Pseudocode und dergleichen verschiedene Varianten zur Darstellung von Prozessen darstellen, die im Wesentlichen in computerlesbaren Medien gespeichert und somit von einem Computer oder Prozessor ausgeführt werden können.

Es sollte verstanden werden, dass das vorgeschlagene Verfahren und die zugehörigen Vorrichtungen in verschiedenen Formen von Hardware, Software, Firmware, Spezialprozessoren oder einer Kombination davon implementiert werden können. Spezialprozessoren können anwendungsspezifische integrierte Schaltungen (ASICs), Reduced Instruction Set Computer (RISC) und / oder Field Programmable Gate Arrays (FPGAs) umfassen. Vorzugsweise wird das vorgeschlagene Verfahren und die Vorrichtung als eine Kombination von Hardware und Software implementiert. Die Software wird vorzugsweise als ein Anwendungsprogramm auf einer Programmspeichervorrichtung installiert. Typischerweise handelt es sich um eine Maschine auf Basis einer Computerplattform, die Hardware aufweist, wie beispielsweise eine oder mehrere Zentraleinheiten (CPU), einen Direktzugriffsspeicher (RAM) und eine oder mehrere Eingabe/Ausgabe (I/O) Schnittstelle(n). Auf der Computerplattform wird typischerweise außerdem ein Betriebssystem installiert. Die verschiedenen Prozesse und Funktionen, die hier beschrieben wurden, können Teil des Anwendungsprogramms sein oder ein Teil, der über das Betriebssystem ausgeführt wird.

Die Offenbarung ist nicht auf die hier beschriebenen Ausführungsbeispiele beschränkt. Es gibt Raum für verschiedene Anpassungen und Modifikationen, die der Fachmann aufgrund seines Fachwissens als auch zu der Offenbarung zugehörend in Betracht ziehen würde.

### Bezugszeichenliste

- 20: berührungsempfindliche Anzeigeeinheit
- 30: Gateway
- 40: Recheneinheit
- 50: Eingabeeinheit
- 60: Speichereinheit
- 70: Datenleitung zur Anzeigeeinheit
- 80: Datenleitung zur Speichereinheit
- 90: Datenleitung zur Eingabeeinheit
- 100: 1. Datenbus
- 102: 2. Datenbus
- 104: 3. Datenbus
- 106: 4. Datenbus
- 110: Kombiinstrument
- 120: Telefon
- 130: Navigationsgerät
- 140: Radio
- 150: Kamera
- 160: Kommunikationsmodul
- 172: Motorsteuergerät
- 174: ESP-Steuergerät
- 176: Getriebe-Steuergerät
- 182: Abstandsregelungs-Steuergerät
- 184: Fahrwerk-Steuergerät
- 186: Lidar-Sensor
- 190: On-Board Diagnosestecker
- 200: Mobilfunk-Basisstation
- 300: Evolved Packet Core
- 400: Internet
- 410: Backend-Zentralrechner
- 1610: Vorhersageeinheit
- 1620: CSI-Kommunikationseinheit
- 1630: Fusionierungseinheit
- 1640: Sende-/Empfangseinheit
- A - E: Fahrzeuge
- G1, G2: Gebäude
- FB: Fahrbahn
- V2VBA: Fahrzeug-zu-Fahrzeug-Kommunikation
- V2VCD: Fahrzeug-zu-Fahrzeug-Kommunikation
- CSI: CSI-Kommunikation
- RFL: Signal-Reflexion
- SEN: Objekterkennung durch Sensorerfassung

## Patentansprüche

1. Verfahren zur vorausschauenden Schätzung der Übertragungsbedingungen für eine Kommunikation zwischen zwei Kommunikationspartnern (B, A), die sich entlang einer Fahrbahn (FB) bewegen, wobei die Kommunikationspartner (B, A) die aktuellen Übertragungsbedingungen jeweils selbst abschätzen, **dadurch gekennzeichnet, dass** die Kommunikationspartner (B, A) abgeschätzte Übertragungsbedingungen von einer Anzahl von vorausfahrenden Kommunikationspartnern (C, D) empfangen und nutzen, um die Übertragungsbedingungen für einen zukünftigen Zeitpunkt abzuschätzen.

2. Verfahren nach Anspruch 1, wobei wenigstens einer der nachfolgenden Kommunikationspartner (B, A) einen Schritt der sensorischen Erfassung der Umgebung vornimmt, wobei der Kommunikationspartner (B, A) nach der sensorischen Erfassung der Umgebung wenigstens ermittelt, ob ähnliche Rahmenbedingungen für die Fahrzeugdirektkommunikation zwischen den vorausfahrenden Kommunikationspartnern (C, D) vorliegen.

3. Verfahren nach Anspruch 2, wobei der Kommunikationspartner (B, A) nach der sensorischen Erfassung der Umgebung wenigstens ermittelt, ob sich die vorausfahrenden Kommunikationspartner (C, D) in einem ähnlichen Abstand fortbewegen.

4. Verfahren nach Anspruch 3, wobei der Kommunikationspartner (B, A) wenigstens einen der vorausfahrenden Kommunikationspartner (C, D) in einer Anforderungs-Nachricht dazu auffordert, die seinerseits abgeschätzten aktuellen Übertragungsbedingungen zu den nachfolgenden Kommunikationspartnern (B, A) zu berichten, wenn ermittelt wurde, dass sich die vorausfahrenden Kommunikationspartner (C, D) wenigstens in einem ähnlichen Abstand fortbewegen.

5. Verfahren nach einem der vorhergehenden Ansprüche, wobei einer der vorausfahrenden Kommunikationspartner (C, D) wenigstens die abgeschätzten aktuellen Übertragungsbedingungen periodisch zu den nachfolgenden Kommunikationspartnern (B, A) berichtet.

6. Verfahren nach einem der Ansprüche 2 bis 5, wobei der Kommunikationspartner (B, A) nach sensorischer Erfassung wenigstens die Entfernung zu den vorausfahrenden Kommunikationspartnern (C, D) ermittelt und daraus einen Zeitpunkt berechnet, für den die Übertragungsbedingungen vorhergesagt werden.

7. Verfahren nach einem der Ansprüche 2 bis 6, wobei der Kommunikationspartner (B, A) nach der sensorischen Erfassung der Umgebung mögliche Probleme mit Signalstreuungen (RFL) ermittelt und die zukünftigen Übertragungsbedingungen unter Berücksichtigung der Signalstreuungen (RFL) abschätzt.

8. Verfahren nach Anspruch 7, wobei der Kommunikationspartner (B, A) die selbst abgeschätzten Übertragungsbedingungen mit den von den vorausfahrenden Kommunikationspartnern (C, D) berichteten Übertragungsbedingungen fusioniert, um eine genauere Abschätzung der zukünftigen Übertragungsbedingungen zu erhalten.

9. Verfahren nach Anspruch 8, wobei der Kommunikationspartner (B, A) die Übertragungsbedingungen mehrfach hintereinander selbst abschätzt und vor dem Schritt der Fusionierung überprüft, ob die mehrfach selbst abgeschätzten zukünftigen Übertragungsbedingungen konvergieren, und überprüft, ob die von den vorausfahrenden Kommunikationspartnern (C, D) mehrfach hintereinander berichteten Übertragungsbedingungen konvergieren, und der Schritt der Fusionierung dann durchgeführt wird, wenn in beiden Fällen die Abschätzergebnisse konvergieren.

10. Vorrichtung zur Durchführung von Verfahrensschritten des Verfahrens nach einem der vorhergehenden Ansprüche, wobei die Vorrichtung mit wenigstens einer Prozessoreinrichtung ausgestattet ist, die dafür eingerichtet ist, einen oder mehrere der Verfahrensschritte bei dem Verfahren nach einem der vorhergehenden Ansprüche durchzuführen.

11. Fahrzeug, **dadurch gekennzeichnet, dass** das Fahrzeug eine Vorrichtung nach Anspruch 10 aufweist.

12. Computerprogram aufweisend einen Programmcode, der bei Abarbeitung in einer Prozessoreinrichtung die Verfahrensschritte nach einem der Ansprüche 1 bis 9 durchführt.

## Claims

1. A method for predictively estimating the transmission conditions for a communication between two communication partners (B, A), which move along a roadway (FB), wherein the communication partners (B, A) in each case estimate the current transmission conditions on their part, **characterized in that** the communication partners (B, A) receive and use estimated transmission conditions from a number of preceding communication partners (C, D) in order to estimate the transmission conditions for a future point in time.

2. The method according to claim 1, wherein at least one of the following communication partners (B, A) performs a step of the sensory detection of the surroundings, wherein after the sensory detection of the surroundings the communication partner (B, A) determines at least whether similar boundary conditions are present for the direct vehicle communication between the preceding communication partners (C, D).

3. The method according to claim 2, wherein after the sensory detection of the surroundings the communication partner (B, A) determines whether the preceding communication partners (C, D) travel at a similar distance.

4. The method according to claim 3, wherein the communication partner (B, A) prompts at least one of the preceding communication partners (C, D) in a prompt message to report the current transmission conditions estimated on its part to the following communication partners (B, A) if it has been determined that the preceding communication partners (C, D) travel at least at a similar distance.

5. The method according to any one of the preceding claims, wherein one of the preceding communication partners (C, D) reports at least the estimated current transmission conditions periodically to the following communication partners (B, A).

6. The method according to any one of claims 2 to 5, wherein after sensory detection the communication partner (B, A) determines at least the distance from the preceding communication partners (C, D) and calculates therefrom a point in time, for which the transmission conditions are predicted.

7. The method according to any one of claims 2 to 6, wherein after the sensory detection of the surrounds the communication partner (B, A) determines possible problems with signal scatters (RFL) and estimates the future transmission conditions in consideration of the signal scatters (RFL).

8. The method according to claim 7, wherein the communication partner (B, A) merges the transmission conditions estimated on its part with the transmission conditions reported by the preceding communication partners (C, D) in order to obtain a more precise estimation of the future transmission conditions.

9. The method according to claim 8, wherein the communication partner (B, A) estimates the transmission conditions repeatedly in succession on its part and checks prior to the step of merging whether the future transmission conditions estimated repeatedly on its part converge, and checks whether the transmission conditions reported repeatedly in succession by the preceding communication partners (C, D) converge, and the step of merging is performed if the estimation results converge in both cases.

10. A device for performing method steps of the method according to any one of the preceding claims, wherein the device is equipped with at least one processor means, which is configured to perform one or several of the method steps of the method according to any one of the preceding claims.

11. A vehicle, **characterized in that** the vehicle has a device according to claim 10.

12. A computer program having a program code, which, when executed in a processor means, performs the method steps according to any one of claims 1 to 9.

## Revendications

1. Procédé pour l'estimation anticipée des conditions de transmission pour une communication entre deux partenaires de communication (B, A) se déplaçant le long d'une voie de circulation (FB), les partenaires de communication (B, A) estimant chacun eux-mêmes les conditions de transmission actuelles, **caractérisé en ce que** les partenaires de communication (B, A) reçoivent, d'un certain nombre de partenaires de communication précédents (C, D), des conditions de transmission estimées et les utilisent afin d'estimer les conditions de transmission pour un moment ultérieur.

2. Procédé selon la revendication 1, dans lequel au moins l'un des partenaires de communication suivants (B, A) réalise une étape de détection sensorielle de l'environnement, le partenaire de communication (B, A) déterminant, après la détection sensorielle de l'environnement, au moins si des conditions générales similaires pour la communication directe des véhicules entre les partenaires de communication précédents (C, D) sont existantes.

3. Procédé selon la revendication 2, dans lequel le partenaire de communication (B, A) détermine, après la détection sensorielle de l'environnement, au moins si les partenaires de communication précédents (C, D) se déplacent à une distance similaire.

4. Procédé selon la revendication 3, dans lequel le partenaire de communication (B, A) demande, au moins à l'un des partenaires de communication précédents (C, D), dans un message de demande, de communiquer aux partenaires de communication suivants (B, A) les conditions de transmission actuelles, estimées par lui-même, s'il a été établi que les partenaires de communication précédents (C, D) se déplaçaient au moins à une distance similaire.

5. Procédé selon l'une des revendications précédentes, dans lequel l'un des partenaires de communication précédents (C, D) communique régulièrement aux partenaires de communication suivants (B, A) au moins les conditions de transmission actuelles estimées.

6. Procédé selon l'une des revendications 2 à 5, dans lequel le partenaire de communication (B, A) détermine, après la détection sensorielle, au moins la distance par rapport aux partenaires de communication précédents (C, D) et en déduit un moment auquel s'appliquent les conditions de transmission prévisionnelles.

7. Procédé selon l'une des revendications 2 à 6, dans lequel le partenaire de communication (B, A) détermine, après la détection sensorielle de l'environnement, des problèmes susceptibles de survenir avec des diffusions de signaux (RFL) et estime les conditions de transmission futures compte tenu des diffusions de signaux (RFL).

8. Procédé selon la revendication 7, dans lequel le partenaire de communication (B, A) fusionne les conditions de transmission, estimées par lui-même, avec les conditions de transmission, communiquées par les partenaires de communication précédents (C, D), afin d'obtenir une estimation plus précise des conditions de transmission futures.

9. Procédé selon la revendication 8, dans lequel le partenaire de communication (B, A) estime lui-même successivement à plusieurs reprises les conditions de transmission, vérifie, avant l'étape de fusion, si les conditions de transmission futures, estimées par lui-même à plusieurs reprises, convergent, vérifie si les conditions de transmission, communiquées successivement à plusieurs reprises par les partenaires de communication précédents (C, D), convergent et si l'étape de fusion est ensuite réalisée lorsque les résultats d'estimation convergent dans les deux cas.

10. Dispositif de réalisation des étapes du procédé selon l'une des revendications précédentes, le dispositif étant équipé au moins d'un système à processeur qui est configuré pour réaliser une ou plusieurs des étapes du procédé selon l'une des revendications précédentes.

11. Véhicule **caractérisé en ce que** le véhicule présente un dispositif selon la revendication 10.

12. Programme informatique présentant un code de programme qui réalise les étapes du procédé selon l'une des revendications 1 à 9 par un traitement dans un système à processeur.
